# EUROPÄISCHE PATENTANMELDUNG

(11) **EP 0 764 508 A2**
(43) Veröffentlichungstag der Anmeldung: **26.03.1997**
(21) Anmeldenummer: 96114990.3
(22) Anmeldetag: 19.09.1996
(51) Int. Cl.: B29C 45/17

(54) **Holmlose Formschliesseinrichtung für eine Spritzgiessmaschine**

(30) Priorität: 23.09.1995 DE 19535436
(71) Anmelder: Hemscheidt Maschinentechnik Schwerin GmbH & Co., 19061 Schwerin (DE)
(72) Erfinder: Wittstock, Volker, Dipl.-Ing., 19055 Schwerin (DE); Füller, Klaus, Dipl.-Ing., 19061 Schwerin (DE)
(74) Vertreter: Jaap, Reinhard

(57) **Zusammenfassung**

Die Erfindung betrifft eine holmlose Formschließeinrichtung für eine Spritzgießmaschine mit einem c-förmigen Maschinenrahmen(1), einer darin gelagerten festen Werkzeugaufspannplatte (2) und einer Endplatte (3) sowie einer dazwischen auf Wälzführungen (12) und Führungsschienen (5) verschiebbaren beweglichen Werkzeugaufspannplatte (4). Aufgabe der Erfindung ist es, eine kostengünstige und einfache Einstellmöglichkeit zu schaffen, durch die die Koaxialität der festen Werkzeugaufspannplatte (2) und der Endplatte (3) bei der Verformung des Maschinenrahmens (1) durch Schließkrafteinwirkung gewährleistet wird und die die Fertigungsabweichungen zwischen den Gelenkpunkten der Führungsschienen (5) ausschließt. Die Lösung sieht vor, daß die Führungsschienen (5) horizontal durch Reibschluß am Maschinenrahmen (1) befestigt sind, vertikal an die feste Werkzeugaufspannplatte (2) und an die Endplatte (3) durch Federn (10) andrückbar sind und zwischen der Endplatte (3) und der festen Werkzeugaufspannplatte (2) durch Federn (11) abstützbar sind.

## Beschreibung

Die Erfindung betrifft eine holmlose Formschließeinrichtung für eine Spritzgießmaschine, bestehend aus einem C-förmigen Maschinenrahmen, an dessen einem Schenkel eine feste Werkzeugaufspannplatte und an dessen anderem Schenkel eine Endplatte angeordnet sind. Dazwischen ist auf Führungen eine bewegliche Werkzeugaufspannplatte gegen die feste Werkzeugaufspannplatte in Richtung einer Spritzachse mit Hilfe eines hydraulischen Schließzylinders längsverschiebbar. Der hydraulische Schließzylinder ist in der Endplatte gelagert und über die Kolbenstange mit der beweglichen Werkzeugaufspannplatte verbunden. Die feste und die bewegliche Werkzeugaufspannplatte besitzen senkrecht zur Spritzachse ausgerichtete Aufspannflächen zur Aufnahme der Formhälften eines Formwerkzeuges. Die während des Einspritz- und Aufreißvorganges durch den hydraulischen Schließzylinder erzeugte Schließ- und Aufreißkraft, wird dabei vom Maschinenrahmen aufgenommen, wobei die Wälzführunggen aus Führungsschienen bestehen, die am Maschinenrahmen befestigt sind und aus an der beweglichen Werkzeugaufspannplatte angeordneten Wälzlagern.

In der DE 4420639 C1 wird eine Lösung beschrieben, bei der die bewegliche Werkzeugaufspannplatte horizontal in zwei im Abstand zueinander angeordneten Achsen auf Rollen gelagert ist, die auf Führungsschienen verfahrbar und abstützbar sind. Aus der Patentanmeldung 19501469.3 ist eine weitere gattungsgemäße ältere Lösung bekannt, in der die feste Werkzeugaufspannplatte in zwei Achsen eines Schenkels vom Maschinenrahmen gelagert ist. Die Endplatte ist in dieser Lösung fest mit dem Schenkel des Maschinenrahmens verbunden. In der DE 4420639 C1 sind dagegen die Endplatte und die feste Werkzeugaufspannplatte jeweils doppelachsig in den Schenkeln des Maschinenrahmens gelagert. Aus den beiden älteren Lösungen ist ferner bekannt, daß die Führungsschienen an ihren Enden im Maschinengestell befestigt sind.

Da die feste Werkzeugaufspannplatte und die Endplatte ebenfalls am Maschinenrahmen befestigt sind, ergeben sich somit Parallelitäts- und Koaxialitätsabweichungen, die den Maßabweichungen der mechanischen Bearbeitung entsprechen. Insbesondere gilt das für die Parallelitätsabweichungen zwischen den Führungsschienen und der Spritzachse sowie der Koaxialitätsabweichung zwischen der Spritzachse und der Achse des Schließzylinders. Ein weiteres Problem, das durch die Lagerung der Führungsschienen in ihren Endpunkten auftritt, besteht in fertigungsbedingten Maßabweichungen der Gelenkpunkte im Maschinenrahmen und in den Führungsschienen. Aufgabe der Erfindung ist es, für eine holmlose Formschließeinrichtung für Spritzgießmaschinen eine kostengünstige und einfache Einstellmöglichkeit zu schaffen, durch die die Koaxialität der festen Werkzeugaufspannplatte und der Endplatte bei der Verformung des Maschinenrahmens durch Schließkrafteinwirkung gewährleistet wird und die die Fertigungsabweichungen zwischen den Gelenkpunkten der Führungsschienen ausschließt. Erfindungsgemäß wird die Aufgabe dadurch gelöst, daß die Führungsschienen horizontal durch Reibschluß am Maschinenrahmen befestigt sind, vertikal an die feste Werkzeugaufspannplatte und an die Endplatte federnd andrückbar sind und zwischen der Endplatte und der festen Werkzeugaufspannplatte federnd abstützbar sind. Bei einer gattungsgemäßen holmlosen Formschließeinrichtung, bei der die feste Werkzeugaufspannplatte doppelachsig im Maschinenrahmen gelagert ist und die Endplatte fest mit dem Maschinenrahmen verbunden ist, ist außerdem die feste Werkzeugaufspannplatte durch Reibschluß an einer der beiden Führungsschienen oder am Maschinenrahmen in ihrer horizontalen Lage rechtwinklig zur Spritzachse fixiert. In der weiteren Ausgestaltung der Erfindung ist an den Andrückflächen zwischen den Führungschienen und der festen Werkzeugaufspannplatte, der Endplatte sowie dem Maschinenrahmen Gleitmaterial vorhanden.

Die Vorteile der erfindungsgemäßen Lösung bestehen darin, daß die fertigungs- und montagebedigten Parallelitätsabweichungen der Führungsschienen zur Spritzachse und die Koaxialitätsweichungen zwischen der Spritzachse und der Achse des Schließzylinders minimiert werden können. Ein weiterer Vorteil der Erfindung besteht darin, daß durch den Reibschluß zwischen den Führungsschienen und dem Maschinengestell die Gelenkpunkte sowie die damit verbundene kostenintensive Fertigung entfallen. Ferner ist durch den Wegfall der Gelenkpunkte eine genaue und einfache Einstellung der Führungsschienen möglich.

Nachstehend wird die Erfindung in einem Ausführungsbeispiel erläutert. In den zugehörigen Zeichnungen ist dargestellt:
- Fig. 1: Gesamtansicht einer holmlosen Formschließeinrichtung
- Fig. 2: Querschnitt vom Maschinengestell und der festen Werkzeugaufspannplatte gemäß der Linie A-A in Figur 1
- Fig. 3: Querschnitt vom Maschinengestell und der Endplatte gemäß der Linie B-B in Figur 1
- Fig. 4: Eine andere Ausführungsform nach Figur 3

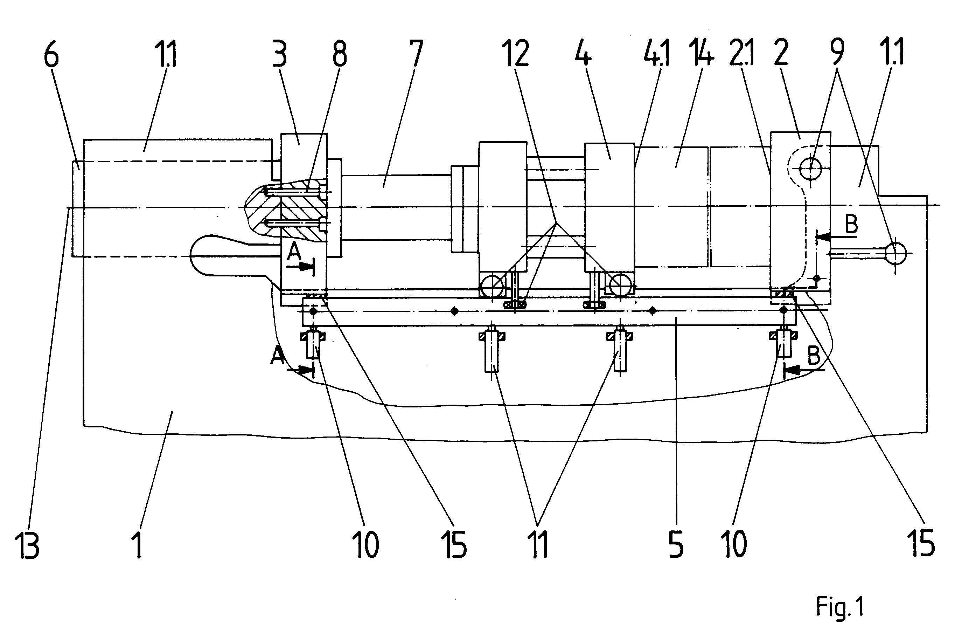

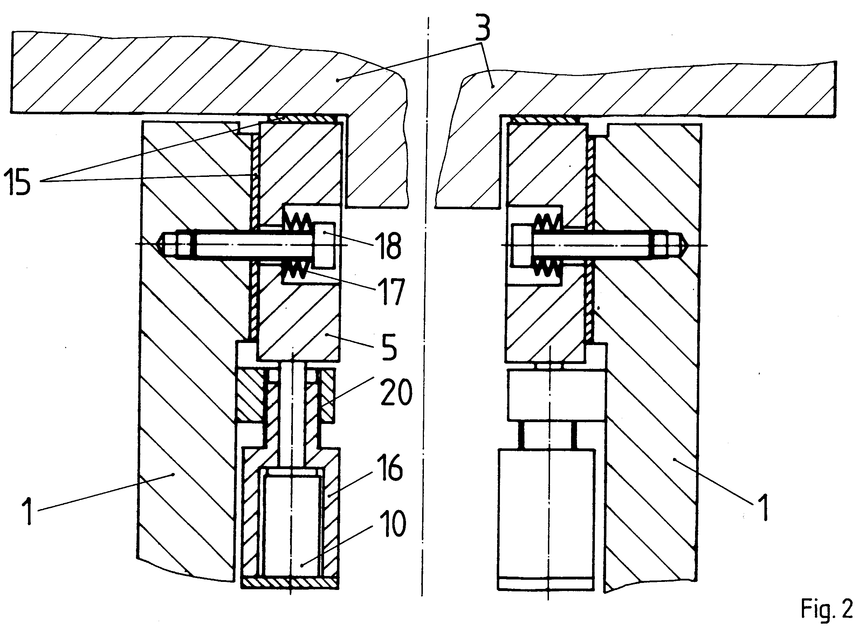

Die in Figur 1 dargestellte holmlose Formschließeinrichtung besteht aus einem C-förmigen Maschinenrahmen 1, an dessen einem Schenkel 1.1 eine feste Werkzeugaufspannplatte 2 in zwei Lagerachsen 9 aufgenommen wird. Am anderen Schenkel 1.1 vom Maschinenrahmen 1 ist die Endplatte 3 mit einer Schraubverbindung 8 befestigt. Dazwischen ist auf Wälzführungen 12 eine bewegliche Werkzeugaufspannplatte 4 gegen die feste Werkzeugaufspannplatte 2 in Richtung einer Spritzachse 13 verfahrbar. Der Fahrantrieb besteht aus einem Schließzylinder 6, der in der Endplatte 3 gelagert ist und über die Kolbenstange 7 mit der beweglichen Werkzeugaufspannplatte 4 verbunden ist. Beide Werkzeugaufspannplatten 2 und 4 besitzen senkrecht zur Spritzachse 13 ausgerichtete Aufspannflächen 2.1 und 4.1 zur Aufnahme der Formhälften eines Formwerkzeuges 14. Die Schließ- und Aufreißkraft, die während des Einspritz- und Aufreißvorganges erzeugt wird, wird vom Maschinenrahmen 1 aufgenommen. Gemäß der Erfindung werden die Führungsschienen 5 horizontal durch Reibschluß am Maschinenrahmen 1 befestigt. Im Ausführungsbeispiel sind die Führungsschienen 5 vorzugsweise innenseitig am Maschinenrahmen 1 befestigt. Nach Figur 2 besteht die Reibschlußverbindung aus Gleitmaterial 15, Federn 17 und einer Schraubverbindung 18, wodurch die Führungsschienen 5 an den Maschinenrahmen 1 andrückbar sind. Die Reibkraft ist durch die Schraubverbindung 18 einstellbar. Des weiteren sind die Führungsschienen 5 vertikal an die feste Werkzeugaufspannplatte 2 und an die Endplatte 3 durch Federn 10 andrückbar. Zwischen der festen Werkzeugaufspannplatte 2 bzw. der Endplatte 3 und den Führungsschienen 5 ist Gleitmaterial 15 angeordnet, wodurch eine horizontaler Verschiebung der festen Werkzeugaufspannplatte 2 und der Endplatte 3 bei Schließkrafteinwirkung gegenüber den Führungsschienen 5 gewährleistet wird. Im Bereich des Verfahrweges von der beweglichen Werkzeugaufspannplatte 4 befinden sich Federn 11 zur weiteren Abstützung der Führungsschienen 5 und zur Einstellung der Parallelität zwischen den Führungsschienen 5 und der Spritzachse 13.

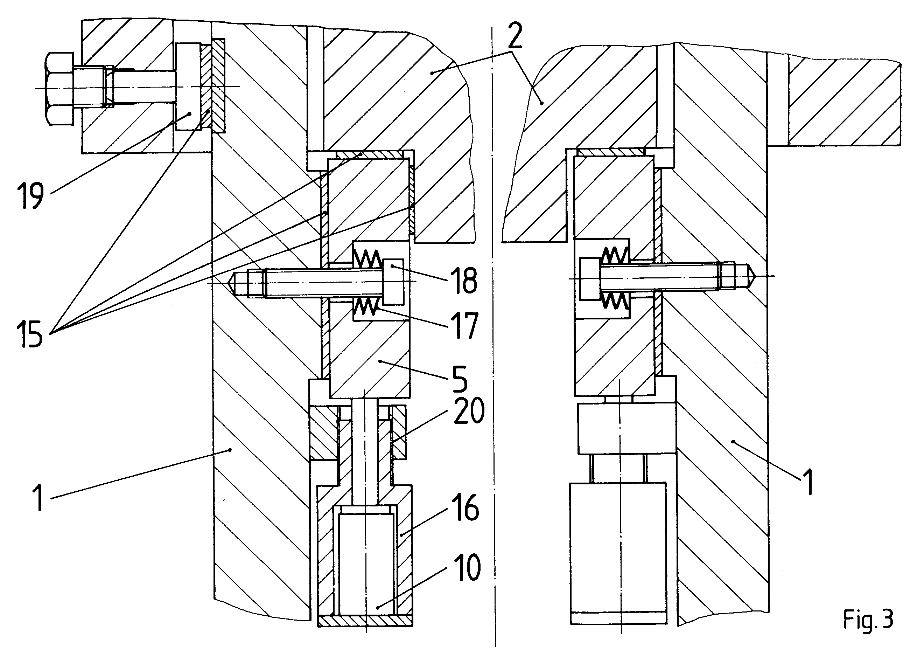

Die Figur 3 zeigt den Schnitt B-B gemäß Figur 1 mit der doppelachsigen Lagerung der festen Werkzeugaufspannplatte 2. Bei dieser Anordnung wird die feste Werkzeugaufpannplatte 2 mit Hilfe eines Andrückstückes 19 an einer Seite horizontal gegen die Führungsschiene 5 gedrückt. An den Andrückstellen befindet sich ebenfalls Gleitmaterial 15. Mit dieser Anord-nung wird eine Überbestimmung der Lagerung der festen Werkzeugaufspannplatte 2 vermieden.

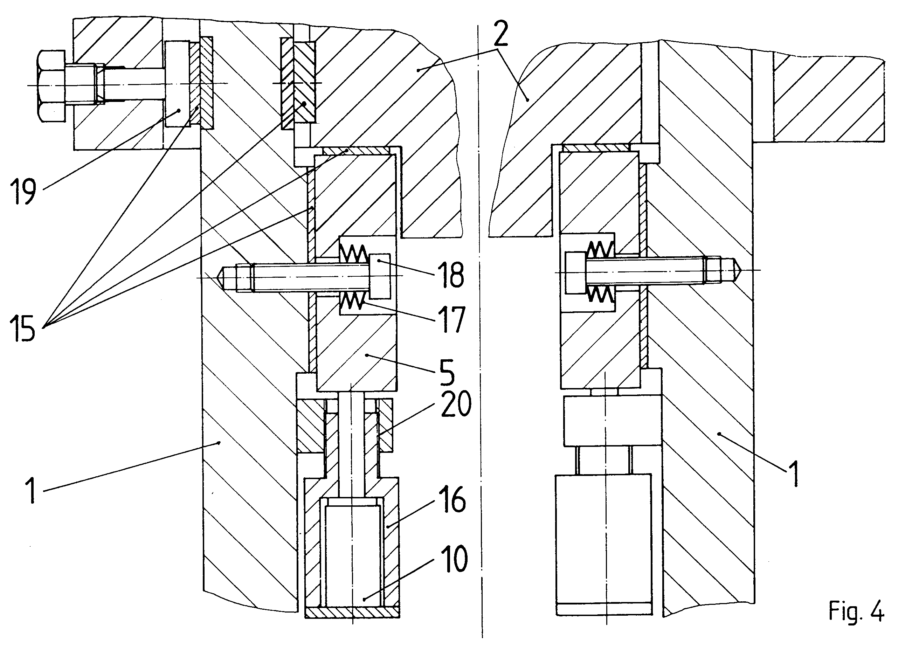

Im Gegensatz zu Figur 3 erfolgt in Figur 4 die horizontale Fixierung der festen Werkzeugaufspannplatte 2 nicht an den Führungsschienen 5, sondern am Maschinengestell 1.

Durch das zwischen den Reibstellen vorhandene Gleitmaterial 15 wird bei Schließkrafteinwirkung an allen Reibstellen der Verschleiß minimiert, wodurch sich eine längere Lebensdauer aller Führungselemente der Formschließeinrichtung ergibt. Aus Figur 2 ist ferner erkennbar, daß die Federn 10 und 11 in einer Hülse 16 vorgespannt sind. Außerdem ist die Hülse 16 durch ein Gewinde 20 in der Höhe justierbar.

Die Federn 10 und 11 unterscheiden sich durch den zulässigen Federweg und die sich daraus ergebende unterschiedlicher Federkraft. Mit Hilfe der vorgeschlagenen Lösung werden günstige Voraussetzungen geschaffen, daß die bewegliche Werkzeugaufspannplatte 4 so angedrückt wird, daß sie sich in ihrem gesamten Verfahrbereich parallel zur festen Werkzeugaufspannplatte 2 befindet.

### Aufstellung der verwendeten Bezugszeichen

- 1: - Maschinenrahmen
- 1.1: - Schenkel
- 2: - Werkzeugaufspannplatte (fest)
- 2.1: - Aufspannfläche
- 3: - Endplatte
- 4: - Werkzeugaufspannplatte (beweglich)
- 4.1: - Aufspannfläche
- 5: - Führungsschiene
- 6: - Schließzylinder
- 7: - Kolbenstange
- 8: - Schraubverbindung
- 9: - Lagerachse
- 10: - Feder
- 11: - Federn
- 12: - Wälzführung
- 13: - Spritzachse
- 14: - Formwerkzeug
- 15: - Gleitmaterial
- 16: - Hülse
- 17: - Feder
- 18: - Schraubverbindung
- 19: - Andrückstück
- 20: - Gewinde

## Patentansprüche

1. Holmlose Formschließeinrichtung für eine Spritzgießmaschine, bestehend aus einem C-förmigen Maschinenrahmen, an dessen einem Schenkel eine feste Werkzeugaufspannplatte und an dessen anderemSchenkel eine Endplatte angeordnet sind, dazwischen auf Wälzführungen eine bewegliche Werkzeugaufspannplatte, die gegen die feste Werkzeugaufspannplatte in Richtung einer Spritzsachse mit Hilfe eines hydraulischen Schließzylinders, der in der Endplatte gelagert ist und über dessen Kolbenstange mit der beweglichen Werkzeugaufspannplatte verbunden ist, längsverschiebbar ist, die feste und die bewegliche Werkzeugaufspannplatte senkrecht zur Spritzachse ausgerichtete Aufspannflächen zur Aufnahme der Formhälften eines Formwerkzeuges besitzen und die Schließ- und Aufreißkraft, die während des Einspritz- und Aufreißvorganges durch den Schließzylinder erzeugt wird, vom Maschinenrahmen aufgenommen wird, wobei die Wälzführungen aus Führungsschienen bestehen, die am Maschinenrahmen befestigt sind und aus an der beweglichen Werkzeugaufspannplatte angeordneten Wälzlagern, dadurch gekennzeichnet, daß die Führungsschienen (5) horizontal durch Reibschluß am Maschinenrahmen(1) befestigt sind, vertikal an die feste Werkzeugaufspannplatte(2)und an die Endplatte (3) durch Federn (10) andrückbar sind und zwischen der Endplatte (3) und der festen Werkzeugaufspannplatte(2)durch Federn(11)abstützbar sind.

2. Holmlose Formschließeinrichtung nach Anspruch 1 mit einer doppelachsig am Maschinenrahmen gelagerten festen Werkzeugaufspannplatte und einer fest am Maschinenrahmen gelagerten Endplatte, dadurch gekennzeichnet, daß die feste Werkzeugaufspannplatte (2) durch Reibschluß an einer der beiden Führungsschienen (5) in ihrer horizontalen Lage rechtwinklig zur Spritzachse (13) fixiert ist.

3. Holmlose Formschließeinrichtung nach Anspruch 1, mit einer doppelachsig am Maschinenrahmen gelagerten festen Werkzeugaufspannplatte und einer fest am Maschinenrahmen gelagerten Endplatte, dadurch gekennzeichnet, daß die feste Werkzeugaufspannplatte (2) durch Reibschluß an einer Seite vom Maschinenrahmen (1) in ihrer horizontalen Lage rechtwinklig zur Spritzachse (13) fixiert ist.

4. Holmlose Formschließeinrichtung nach einem der Ansprüche 1 bis 3 dadurch gekennzeichnet, daß an den Andruckflächen zwischen den Führungsschienen (5), der festen Werkzeugaufspannplatte (2), der Endplatte (3) sowie dem Maschinenrahmen (1), Gleitmaterial (15) vorhanden ist.
